# FASCICULE DE BREVET EUROPEEN

(11) **EP 4 147 966 B1**
(45) Date de publication et mention de la délivrance du brevet: **12.06.2024**
(21) Numéro de dépôt: 22194717.9
(22) Date de dépôt: 08.09.2022
(51) Int. Cl.: B64C 1/10, B64C 25/10, B64C 1/18

(54) **AÉRONEF COMPRENANT UNE CASE DE TRAIN D'ATTERRISSAGE PRINCIPALE PRÉSENTANT UNE COQUE RÉALISÉE D'UN SEUL TENANT**
LUFTFAHRZEUG MIT EINEM HAUPTFAHRWERKSKASTEN, DER EINE AUS EINEM STÜCK GEFERTIGTE SCHALE AUFWEIST
AIRCRAFT INCLUDING A MAIN LANDING GEAR BOX HAVING A SHELL MADE IN A SINGLE PIECE

(30) Priorité: 13.09.2021 FR 2109585
(43) Date de publication de la demande: 15.03.2023
(73) Titulaire: AIRBUS OPERATIONS (S.A.S.), 31060 Toulouse (FR); Airbus Atlantic (S.A.S.), 17300 Rochefort (FR)
(72) Inventeur: PLET, Matthieu, 31060 TOULOUSE (FR); DUBREUIL, Laurent, 31770 COLOMIERS (FR); PRUDENT, Alain, 31770 COLOMIERS (FR); MATHEIS, Xavier, 31060 TOULOUSE (FR); ANDRIEU, Gilles, 31770 COLOMIERS (FR); DESGACHES, Damien, 31770 COLOMIERS (FR)
(74) Mandataire: Fantin, Laurent

(56) Documents cités:
- EP-A1- 2 738 088
- US-A1- 2008 173 765
- US-A1- 2019 112 034
- US-A1- 2019 112 035
- US-B2- 8 302 910

## Description

La présente demande se rapporte à un aéronef comprenant une case de train d'atterrissage principale présentant une coque réalisée d'un seul tenant.

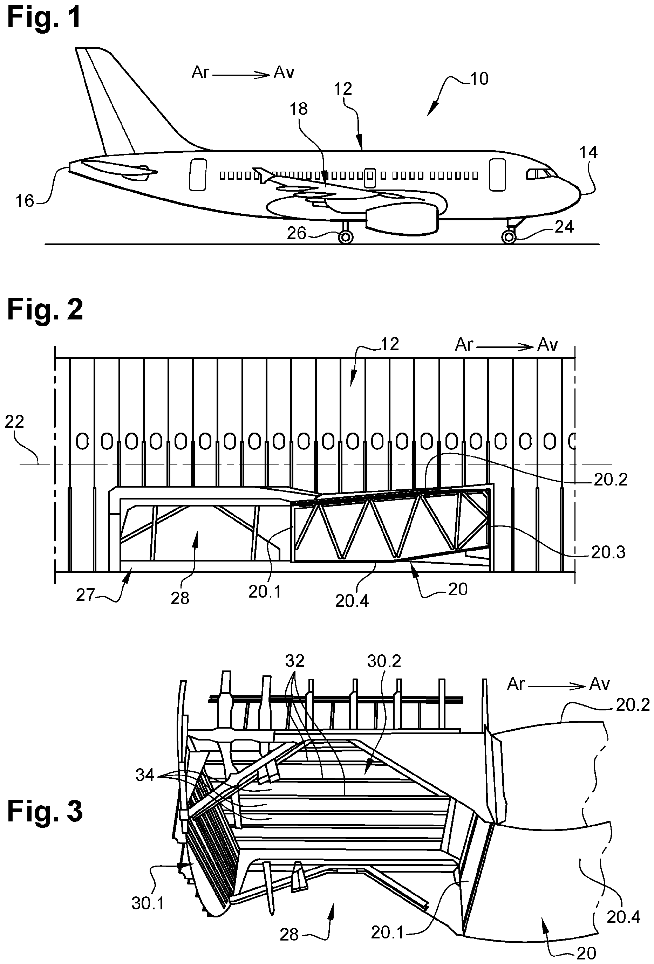

Comme illustré sur les figures 1 et 2, un aéronef 10 comprend un fuselage 12 qui s'étend entre une pointe avant 14 et un cône arrière 16, ainsi que des ailes 18 disposées de part et d'autre du fuselage 12 et reliées à ce dernier par un caisson central de voilure 20. Selon une configuration, le caisson central de voilure comprend un panneau arrière 20.1, un panneau supérieur 20.2, un panneau avant 20.3 ainsi qu'un panneau inférieur 20.4.

Pour la suite de la description, un axe longitudinal 22 de l'aéronef 10 correspond à l'axe horizontal, lorsque l'aéronef 10 est au sol, qui s'étend de la pointe avant 14 au cône arrière 16 de l'aéronef 10. Une direction longitudinale est une direction parallèle à l'axe longitudinal 22. Un plan longitudinal est un plan horizontal et qui comprend un axe qui qui est parallèle à l'axe longitudinal 22. Un plan médian vertical est un plan vertical passant par l'axe longitudinal 22. Un plan transversal est un plan perpendiculaire à l'axe longitudinal 22.

L'aéronef 10 comprend un train d'atterrissage avant 24 positionné à proximité de la pointe avant 14 ainsi que deux trains d'atterrissage principaux 26 positionnés de part et d'autre du fuselage 12, à l'arrière du caisson central de voilure 20. Chaque train d'atterrissage avant ou principal 24, 26 est configuré pour occuper une position déployée, comme illustré sur la figure 1, dans laquelle il est positionné en dehors d'une case de train, ainsi qu'une position rétractée dans laquelle il est positionné dans la case de train.

Comme illustré sur les figures 2 à 5, le fuselage 12 comprend une case de train d'atterrissage principale 28 positionnée à l'arrière du caisson central de voilure 20 et configurée pour recevoir les deux trains d'atterrissage principaux 26 dans la position rétractée. Cette case de train d'atterrissage principale 28 comprend une paroi transversale arrière 30.1 ainsi qu'une paroi de fond 30.2 reliée au panneau supérieur 20.2 du caisson central de voilure 20. La case de train d'atterrissage principale 28 est fermée par une poutre ventrale 27. La paroi transversale arrière 30.1 et la paroi de fond 30.2 de la case de train d'atterrissage principale 28 forment une barrière étanche entre une première zone pressurisée, à l'intérieur du fuselage 12 et à l'extérieur de la case de train d'atterrissage principale 28, et une deuxième zone non pressurisée à l'intérieur de la case de train d'atterrissage principale 28. En raison de cette différence de pression, la paroi transversale arrière 30.1 et la paroi de fond 30.2 sont soumises à de fortes contraintes.

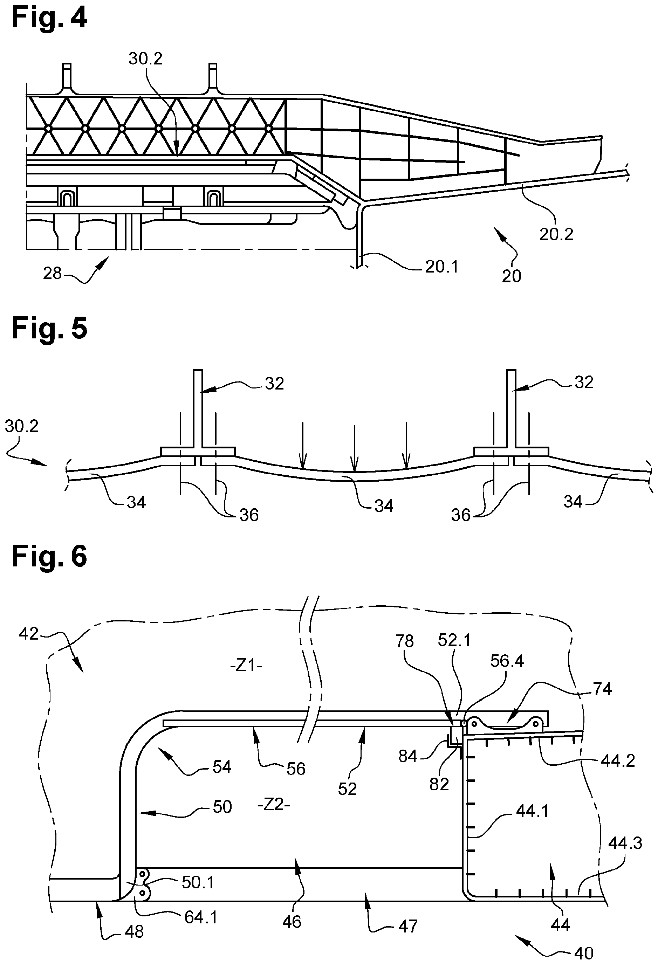

Selon un mode de réalisation, la paroi de fond 30.2 comprend plusieurs poutres longitudinales 32 métalliques, parallèles entre elles, orientées parallèlement à la direction longitudinale et qui s'étendent de la paroi transversale arrière 30.1 jusqu'au caisson central de voilure 20. En complément, comme illustré sur la figure 5, la paroi de fond 30.2 comprend une pluralité de tôles, également appelées également membranes 34, au moins une membrane 34 entre chaque paire de poutres longitudinales consécutives. Ces membranes 34 sont reliées aux poutres longitudinales 32 par un grand nombre d'éléments de fixation 36. Les membranes 34 sont par exemple métalliques dans les configurations actuelles.

Chaque membrane 34 est suffisamment souple pour pouvoir se déformer en cas d'une différence de pression importante de part et d'autre de la membrane 34, comme illustré sur la figure 5.

Compte tenu du nombre de pièces à assembler et d'éléments de fixation à mettre en place, l'assemblage de la case de train d'atterrissage principale 28 est relativement long et fastidieux.

Une autre case de train d'atterrissage de l'art antérieur est divulguée dans le document US2008/173765A1.

La présente invention vise à remédier à tout ou partie des inconvénients de l'art antérieur.

A cet effet, l'invention a pour objet un aéronef comprenant un fuselage présentant une direction longitudinale ainsi qu'un plan médian vertical et comportant d'avant en arrière un caisson central de voilure, une case de train d'atterrissage principale ainsi qu'un tronçon de fuselage, la case de train d'atterrissage principale comportant une paroi transversale arrière reliée au tronçon de fuselage positionné à l'arrière de la case de train d'atterrissage principale ainsi qu'une paroi de fond reliée au caisson central de voilure, la paroi transversale arrière et la paroi de fond formant une barrière étanche entre une première zone pressurisée et une deuxième zone non pressurisée, l'aéronef comprenant une poutre ventrale traversant la case de train d'atterrissage principale.

Selon l'invention, la case de train d'atterrissage principale comprend :
- une coque, réalisée d'un seul tenant en matériau composite, séparant la première zone pressurisée et la deuxième zone non pressurisée, ladite coque comportant une première partie correspondant à la paroi de fond, une deuxième partie correspondant à la paroi transversale arrière, une face intérieure orientée vers la deuxième zone non pressurisée ainsi qu'une face extérieure orientée vers la première zone pressurisée,
- au moins deux poutres longitudinales en matériau composite, orientées parallèlement à la direction longitudinale et reliées à la coque,
- des quilles assurant la continuité de la poutre ventrale, les quilles étant positionnées au droit des poutres longitudinales et étant reliées à la poutre ventrale, au tronçon de fuselage ainsi qu'à la coque.

Le fait de remplacer la multitude de membranes par une seule coque permet de supprimer un grand nombre de pièces, ce qui tend à simplifier le procédé d'assemblage et à réduire sa durée. De plus, cela permet de réduire le nombre de jonctions entre les différentes membranes, ce qui permet de simplifier la conception de la case de train d'atterrissage principale et d'améliorer sa résistance.

Selon une autre caractéristique, la coque comprend une troisième partie courbe reliant les première et deuxième parties.

Selon une autre caractéristique, la paroi de fond comprend un bord avant jouxtant le caisson central de voilure et la paroi transversale arrière comprend un bord arrière jouxtant le tronçon de fuselage positionné à l'arrière de la case de train d'atterrissage principale. En complément, les poutres longitudinales, dites poutres longitudinales droite et gauche, sont positionnées de part et d'autre du plan médian vertical, sur la face extérieure de la coque et présentent chacune un premier tronçon rectiligne plaqué contre la première partie de la coque, un deuxième tronçon rectiligne plaqué contre la deuxième partie de la coque ainsi qu'un troisième tronçon reliant les premier et deuxième tronçons, courbe et plaqué contre la troisième partie courbe de la coque.

Selon une autre caractéristique, les poutres longitudinales droite et gauche présentent chacune une première extrémité reliée au caisson central de voilure ainsi qu'une deuxième extrémité reliée au tronçon de fuselage positionné à l'arrière de la case de train d'atterrissage principale, les poutres longitudinales droite et gauche étant continues entre les première et deuxième extrémités.

Selon une autre caractéristique, chaque quille comprend une ferrure. En complément, la coque comprend des lumières à proximité ou au niveau de son bord arrière, chaque ferrure traversant une lumière de sorte que les ferrures soient en saillie par rapport à la face intérieure de la coque et que les quilles soient positionnées en appui contre le bord arrière de la coque.

Selon une autre caractéristique, chaque quille comprend une âme ainsi qu'une semelle, pour chaque quille, la ferrure et l'âme étant positionnées de part et d'autre de la semelle. En complément, les lumières sont positionnées par rapport aux poutres longitudinales droite et gauche de manière à ce que lorsque les ferrures traversent les lumières, les semelles soient plaquées contre le bord arrière de la coque et les âmes soient plaquées respectivement contre les poutres longitudinales droite et gauche et reliées à ces dernières.

Selon une autre caractéristique, au moins les poutres longitudinales droite et gauche s'étendent au-delà du bord avant de la coque, chacune de leurs premières extrémités étant reliée par une attache au caisson central de voilure.

Selon une autre caractéristique, chaque attache comprend :
- au moins une semelle plaquée contre le caisson central de voilure et reliée à ce dernier par des éléments de fixation,
- au moins une âme solidaire de la semelle et pourvue d'au moins un orifice,
- un élément de liaison, pour chaque orifice, traversant ledit orifice et la poutre longitudinale droite ou gauche.

Selon une autre caractéristique, la case de train d'atterrissage principale comprend une barrière d'étanchéité qui s'étend le long du bord avant de la coque, ladite barrière étanche étant solidaire de la coque et en contact avec le caisson central de voilure.

Selon une autre caractéristique, le caisson central de voilure comprend une cornière configurée pour maintenir la barrière d'étanchéité plaquée contre le caisson central de voilure et la face intérieure de la coque, au niveau du bord avant de la coque.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une coupe longitudinale d'une partie du fuselage de l'aéronef visible sur la figure 1,
- La figure 3 est une vue en perspective d'une case de train d'atterrissage principale vide illustrant un mode de réalisation de l'art antérieur,
- La figure 4 est une coupe longitudinale d'une case de train d'atterrissage principale vide illustrant un mode de réalisation de l'art antérieur,
- La figure 5 est une coupe transversale d'une case de train d'atterrissage principale vide illustrant un mode de réalisation de l'art antérieur,
- La figure 6 est une coupe longitudinale d'une case de train d'atterrissage principale vide illustrant un mode de réalisation de l'invention,
- La figure 7 est une vue en perspective, selon un premier angle de vue, d'une coque d'une case de train d'atterrissage principale illustrant un mode de réalisation de l'invention,
- La figure 8 est une vue en perspective de la coque visible sur la figure 7 illustrant un procédé de fabrication de ladite coque,
- La figure 9 est une vue en perspective, selon un deuxième angle de vue, de la coque visible sur la figure 7,
- La figure 10 est une vue en perspective d'une quille de continuité de la poutre ventrale illustrant un mode de réalisation de l'invention,
- La figure 11 est une vue en coupe de la quille, visible sur la figure 10, reliée à une paroi arrière d'une case de train d'atterrissage principale illustrant un mode de réalisation de l'invention,
- La figure 12 est une vue en perspective d'une paroi arrière d'une case de train d'atterrissage principale illustrant un mode de réalisation de l'invention,
- La figure 13 est une vue en perspective de l'avant de la paroi de fond d'une case de train d'atterrissage principale illustrant un mode de réalisation de l'invention, et
- La figure 14 est une coupe longitudinale d'une liaison entre une paroi de fond d'une case de train d'atterrissage principale et un caisson central de voilure illustrant un mode de réalisation de l'invention.

Sur la figure 6, un aéronef 40 comprend un fuselage 42 comportant d'avant en arrière un caisson central de voilure 44, une case de train d'atterrissage principale 46 ainsi qu'un tronçon de fuselage 48 positionné à l'arrière de la case de train d'atterrissage principale 46.

Selon un mode de réalisation, le caisson central de voilure 44 comprend un panneau arrière 44.1 positionné dans un plan transversal, un panneau supérieur 44.2, un panneau avant (non représenté) ainsi qu'un panneau inférieur 44.3. Ce caisson central voilure n'est pas plus décrit car il peut être identique à ceux de l'art antérieur.

La case de train d'atterrissage principale 46 comprend une paroi transversale arrière 50 ainsi qu'une paroi de fond 52. La paroi transversale arrière 50 présente un bord inférieur 50.1 relié au tronçon de fuselage 48 positionné à l'arrière de la case de train d'atterrissage principale 46. La paroi de fond 52 présente un bord avant 52.1 relié au caisson central de voilure 44. Une poutre ventrale 47 (également appelée « keel beam » en anglais) traverse la case de train d'atterrissage principale 46.

La paroi transversale arrière 50 et la paroi de fond 52 de la case de train d'atterrissage principale 46 forment une barrière étanche entre une première zone pressurisée Z1, à l'intérieur du fuselage 42 et à l'extérieur de la case de train d'atterrissage principale 46, et une deuxième zone non pressurisée Z2 à l'intérieur de la case de train d'atterrissage principale 46. Selon une configuration, la paroi transversale arrière 50 et la paroi de fond 52 sont reliées par une zone de jonction 54 courbe, en forme approximativement d'un quart de cylindre ayant un axe horizontal et transversal.

Selon une caractéristique, la case de train d'atterrissage principale 46 comprend une coque 56, réalisée d'un seul tenant, qui sépare la première zone pressurisée Z1 et la deuxième zone non pressurisée Z2. Cette coque 56 s'étend sur toute ou quasiment toute la surface de la paroi transversale arrière 50 et de la paroi de fond 52.

Le fait de remplacer la multitude de membranes par une seule coque permet de supprimer un grand nombre de pièces, de simplifier le procédé d'assemblage et d'en réduire la durée.

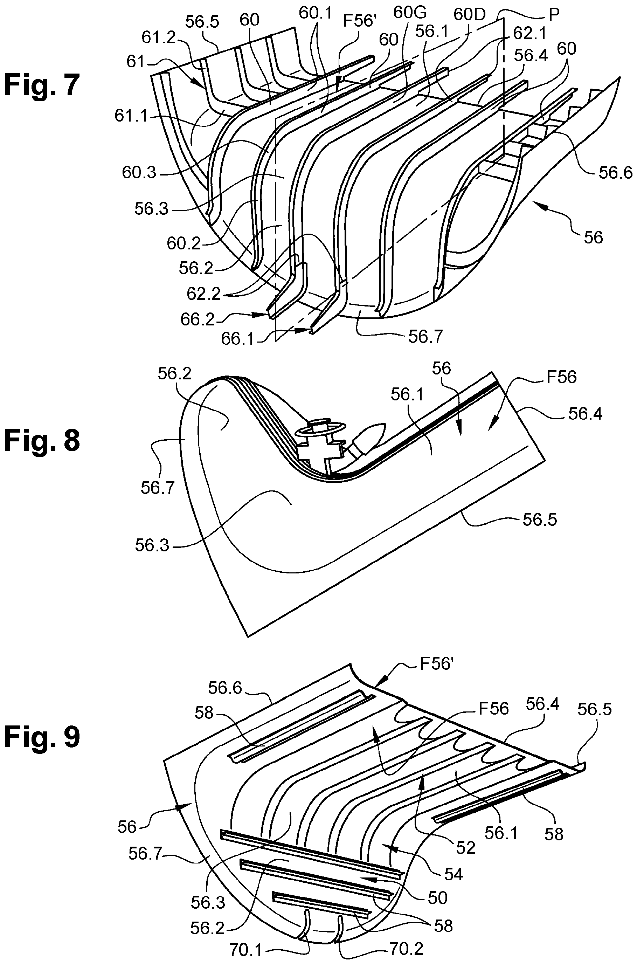

Sur le plan géométrique, comme illustré sur les figures 7 à 9, la coque 56 comprend une première partie 56.1 sensiblement plane et rectangulaire correspondant à la paroi de fond 52, une deuxième partie 56.2 sensiblement plane, formant un demi-disque et correspondant à la paroi transversale arrière 50, une troisième partie 56.3 courbe, en forme de quart de cylindre, reliant les première et deuxième parties 56.1, 56.2 et correspondant à la zone de jonction 54. La coque 56 comprend également un bord avant 56.4 sensiblement rectiligne, à l'avant de la coque 56 et jouxtant le caisson central de voilure 44, deux bords latéraux droit et gauche 56.5, 56.6 courbes, positionnés de part et d'autre de la première partie 56.1, ainsi qu'un bord arrière 56.7 courbe, bordant la deuxième partie 56.2 et jouxtant le tronçon de fuselage 48 positionné à l'arrière de la case de train d'atterrissage principale 46.

La coque 56 présente une face intérieure F56 orientée vers la deuxième zone non pressurisée Z2 ainsi qu'une face extérieure F56' opposée à la face intérieure F56 et orientée vers la première zone pressurisée Z1.

La coque 56 est sensiblement symétrique par rapport au plan médian vertical P du fuselage 42.

La coque 56 est en matériau composite, notamment thermoplastique ou thermodurcissable. Selon un mode de réalisation, la coque 56 est obtenue à partir d'une structure de fibres noyée dans une matrice de résine thermoplastique ou thermodurcissable. La structure de fibres est réalisée à partir de fibres (pré-imprégnées de résine ou sèches) déposées par différentes techniques de dépose de fibres comme une technique de dépose automatique de bandes de fibres pré-imprégnées dite ATL (pour Automated Tape Laying en anglais) ou AFP (pour Automatic Fiber Placement en anglais) par exemple. Ceci permet d'optimiser l'épaisseur de la coque et l'empilement des bandes formant cette dernière.

Selon une configuration, la case de train d'atterrissage principale 46 comprend au moins un raidisseur 58 positionné sur la face intérieure F56 de la coque 56 et relié à cette dernière par toute technique appropriée. Le ou les raidisseurs 58 sont par exemple en forme d'oméga.

En plus de la coque 56, la case de train d'atterrissage principale 46 comprend au moins deux poutres longitudinales 60, orientées parallèlement à la direction longitudinale, positionnées sur la face extérieure F56' de la coque 56 et reliées à la coque 56. Selon un agencement, les poutres longitudinales 60 sont régulièrement espacées dans un plan transversal.

Les poutres longitudinales 60 sont positionnées de manière symétrique par rapport au plan médian vertical P.

Selon un agencement, la case de train d'atterrissage principale 46 comprend plusieurs poutres longitudinales 60, dont deux poutres longitudinales droite et gauche 60D, 60G positionnées de part et d'autre du plan médian vertical P les plus proches de ce dernier.

Selon un mode de réalisation, les poutres longitudinales 60 sont en matériau composite thermoplastique ou thermodurcissable. Les poutres longitudinales 60 peuvent être réalisées par différentes techniques, comme par thermoformage par exemple. Les poutres longitudinales 60 sont réalisées d'un seul tenant.

Les poutres longitudinales 60 sont reliées à la coque 56 par rivetage, par soudage ou par toute autre technique d'assemblage.

Quel que soit le mode de réalisation, la case de train d'atterrissage principale 46 comprend au moins une poutre longitudinale 60 en matériau composite, reliée à la coque 56 pour la renforcer.

Selon une caractéristique, les poutres longitudinales 60 s'étendent de manière continue du bord avant 56.4 de la coque 56, qui correspond au bord avant 52.1 de la paroi de fond 52 relié au caisson central de voilure 44, jusqu'au bord arrière 56.7 de la coque 56, qui correspond au bord inférieur 50.1 de la paroi transversale arrière 50 relié au tronçon de fuselage 48 positionné à l'arrière de la case de train d'atterrissage principale 46. Au moins deux poutres longitudinales droite et gauche 60D, 60G, positionnées de part et d'autre du plan médian vertical P, présentent chacune un premier tronçon 60.1 rectiligne plaqué contre la première partie 56.1 de la coque 56, un deuxième tronçon 60.2 rectiligne plaqué contre la deuxième partie 56.2 de la coque 56 ainsi qu'un troisième tronçon 60.3 reliant les premier et deuxième tronçons 60.1, 60.2, courbe et plaqué contre la troisième partie 56.3 courbe de la coque 56.

Selon une particularité, au moins les poutres longitudinales droite et gauche 60D, 60G présentent chacune une première extrémité 62.1 reliée au caisson central de voilure 44 ainsi qu'une deuxième extrémité 62.2 reliée au tronçon de fuselage 48 positionné à l'arrière de la case de train d'atterrissage principale 46 et sont continues entre les première et deuxième extrémités 62.1, 62.2. Cette configuration assure une meilleure transmission des efforts entre le caisson central de voilure 44 et le tronçon de fuselage 48 positionné à l'arrière de la case de train d'atterrissage principale 46.

En plus de la coque 56, la case de train d'atterrissage principale 46 comprend des nervures 61, orientées sensiblement orthogonalement à la direction longitudinale, positionnées sur la face extérieure F56' de la coque 56 et reliées à la coque 56. Selon un agencement, les nervures 61 sont régulièrement espacées dans un plan longitudinal. Les nervures 61 sont positionnées de manière symétrique par rapport au plan médian vertical P.

Selon un mode de réalisation, les nervures 61 sont en matériau composite thermoplastique ou thermodurcissable. Les nervures 61 peuvent être réalisées par différentes techniques, comme par thermoformage par exemple. Les nervures 61 sont réalisées d'un seul tenant.

Les nervures 61 sont reliées à la coque 56 par rivetage, par soudage ou par toute autre technique d'assemblage.

Les nervures 61 permettent de renforcer la coque 56.

Selon une caractéristique, les nervures 61 s'étendent de manière continue du bord latéral droit ou gauche 56.5 ou 56.6 de la coque 56 jusqu'à une poutre longitudinale 60. Chaque nervure 61 présente un premier tronçon 61.1 rectiligne plaqué contre la première partie 56.1 de la coque 56 et un deuxième tronçon 61.2 courbe plaqué contre une portion courbe de la coque qui s'étend jusqu'au bord latéral droit ou gauche 56.5 ou 56.6 de la coque 56.

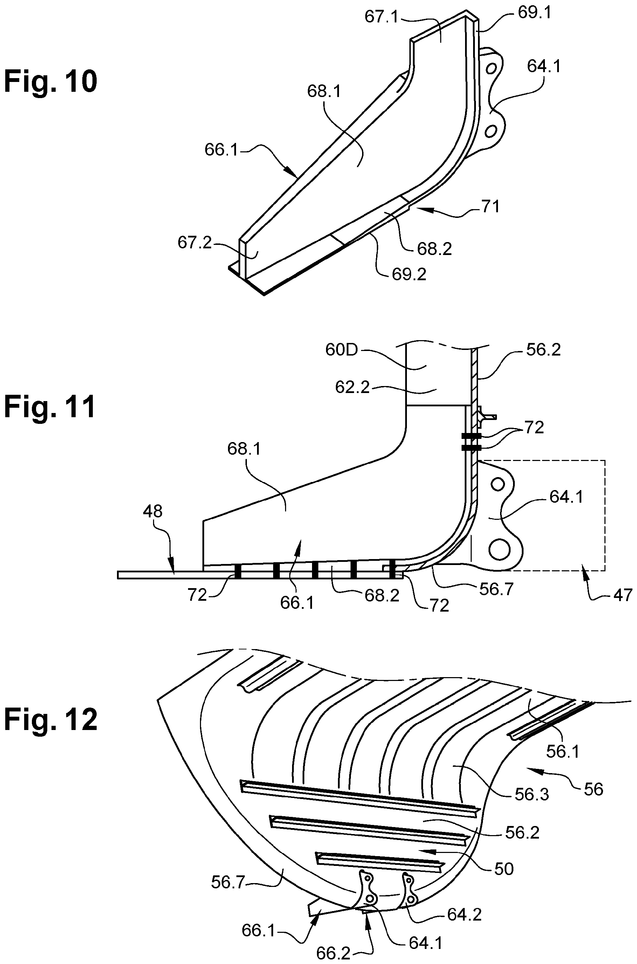

Selon un mode de réalisation visible sur les figures 10 à 12, la case de train d'atterrissage principale 46 comprend des quilles 66.1, 66.2 de continuité de la poutre ventrale 47. Selon un agencement, les quilles 66.1, 66.2 sont positionnées approximativement au droit des poutres longitudinales droite et gauche 60D, 60G. Les quilles 66.1, 66.2 sont reliées à la poutre ventrale 47, au tronçon de fuselage 48 ainsi qu'à la coque 56.

Chaque quille 66.1, 66.2 comporte une âme 68.1, une semelle 68.2 et une ferrure 64.1, 64.2. Une quille 66.1, 66.2 est réalisée d'un seul tenant et forme une unique et même pièce. Chaque quille 66.1, 66.2 présente une section transversale en C, ou en T, ou en I, ou encore en L. La ferrure 64.1, 64.2 et l'âme 68.1 d'une quille 66.1, 66.2 sont positionnées de part et d'autre de la semelle 68.2. La ferrure 64.1, 64.2 est agencée dans le même plan que l'âme 68.1. L'âme 68.1 et la semelle 68.2 sont courbes.

Chaque quille 66.1, 66.2 présente une première extrémité 67.1, reliée à la coque 56, et une deuxième extrémité 67.2. La quille 66.1, 66.2 est courbe entre ses première et deuxième extrémités 67.1, 67.2.

Selon une configuration, les quilles 66.1, 66.2 sont fixées à la coque 56 avec des éléments de fixation 72 tels que des rivets. Selon une autre configuration, les quilles 66.1, 66.2 sont fixées à la coque 56 sans éléments de fixation.

Pour chaque quille 66.1, 66.2, entre ses première et deuxième extrémités 67.1, 67.2, la semelle 68.2 comporte une première partie 69.1 qui s'étend à partir de la première extrémité 67.1 de la quille 66.1, 66.2, suivie d'une deuxième partie 69.2 qui s'étend jusqu'à la deuxième extrémité 67.2 de la quille 66.1, 66.2. La première partie 69.1 présente une épaisseur sensiblement constante. La deuxième partie 69.2 présente une épaisseur qui varie entre son extrémité à la jonction avec la première partie 69.1 et la deuxième extrémité 67.2 de la quille 66.1, 66.2. En particulier, l'épaisseur de la deuxième partie 69.2 à sa jonction avec la première partie 69.1 est supérieure à l'épaisseur de la première partie 69.1, et l'épaisseur de la deuxième partie 69.2 au niveau de la deuxième extrémité 67.2 de la quille 66.1, 66.2 est inférieure à l'épaisseur de la première partie 69.1. L'épaisseur de la deuxième partie 69.2 diminue donc entre son extrémité à la jonction avec la première partie 69.1 et son extrémité au niveau de la deuxième extrémité 67.2 de la quille 66.1, 66.2. Ainsi, la semelle 68.2 présente un décroché 71.

La coque 56 comprend des lumières 70.1, 70.2 à proximité ou au niveau de son bord arrière 56.7. Les quilles 66.1, 66.2, et notamment les ferrures 64.1, 64.2, traversent les lumières 70.1, 70.2 de la coque 56, de sorte que les ferrures 64.1, 64.2 soient positionnées en saillie par rapport à la face intérieure F56 de la coque 56. Les quilles 66.1, 66.2 sont ainsi positionnées en appui contre le bord arrière 56.7 de la coque 56. Plus précisément, la première partie 69.1 de la semelle 68.2 de chaque quille 66.1, 66.2 présente un profil courbe comme le bord arrière 56.7 de la coque 56. La quille 66.1, 66.2 vient en appui contre la coque 56 de sorte que le bord arrière 56.7 de la coque 56 se loge dans le décroché 71 de la quille 66.1, 66.2.

Les lumières 70.1, 70.2 sont décalées par rapport aux poutres longitudinales droite et gauche 60D et 60G de manière à ce que lorsque les ferrures 64.1, 64.2 traversent les lumières 70.1, 70.2, les semelles 68.2 des quilles 66.1, 66.2 soient plaquées contre le bord arrière 56.7 de la coque 56 et les âmes 68.1 des quilles 66.1, 66.2 soient plaquées respectivement contre les poutres longitudinales droite et gauche 60D, 60G et reliées à ces dernières.

Selon une configuration, les quilles 66.1, 66.2 sont reliées aux poutres longitudinales droite et gauche 60D, 60G sans éléments de fixation, et sont par exemple soudées aux poutres longitudinales droite et gauche 60D, 60G ou sont co-consolidées avec les poutres longitudinales droite et gauche 60D, 60G.

Les quilles 66.1, 66.2 sont fixées à la poutre ventrale 47 via les ferrures 64.1, 64.2. Selon un agencement, les ferrures 64.1, 64.2 sont positionnées dans le prolongement de la poutre ventrale 47 afin de reprendre les efforts de celle-ci.

Le tronçon de fuselage 48 est positionné en dessous des quilles 66.1, 66.2, notamment au niveau de la deuxième partie 69.2 de la semelle 68.2 et au niveau d'une partie de la première partie 69.1 de la semelle 68.2. Une partie du tronçon de fuselage 48 est en superposition de la coque 56. Chaque quille 66.1, 66.2 est fixée au tronçon de fuselage 48, par exemple au moyen d'éléments de fixation 72, tels que des rivets. En particulier, des éléments de fixation 72 traversent le tronçon de fuselage 48 ainsi que la deuxième partie 69.2 de la semelle 68.2 et des éléments de fixation 72 traversent le tronçon de fuselage 48, la première partie 69.1 de la semelle 68.2 et le bord arrière 56.7 de la coque 56. Selon une autre configuration, chaque quille 66.1, 66.2 est fixée au tronçon de fuselage 48 sans éléments de fixation.

Ainsi, les poutres longitudinales droite et gauche 60D et 60G sont reliées, à leur deuxième extrémité, au tronçon de fuselage 48 via les quilles 66.1, 66.2.

Cette configuration des quilles 66.1, 66.2 permet un transfert de charge entre la poutre ventrale 47 (efforts de compression et de tension), le tronçon de fuselage 48 et le bord arrière 56.7 de la coque 56.

Selon un mode de réalisation, au moins les poutres longitudinales droite et gauche 60D, 60G s'étendent au-delà du bord avant 56.4 de la coque 56 et chacune de leurs premières extrémités 62.1 est reliée par une attache 74 au caisson central de voilure 44. Selon une conception, chaque attache 74 présente une section transversale en T et comprend au moins une semelle 76.1 plaquée contre le panneau supérieur 44.2 du caisson central de voilure 44 et reliée à ce dernier par des éléments de fixation 78 ainsi qu'au moins une âme 76.2 solidaire de la semelle 76.1 et présentant au moins un orifice 76.3. Selon une conception, l'attache 74 comprend deux orifices 76.3. En complément, chaque attache 74 comprend, pour chaque orifice 76.3, un élément de liaison traversant l'orifice 76.3 et la poutre longitudinale droite ou gauche 60D, 60G.

Selon une configuration, toutes les poutres longitudinales 60 s'étendent au-delà du bord avant 56.4 de la coque 56 et chacune de leurs premières extrémités 62.1 est reliée par une attache 74 comme précédemment décrite.

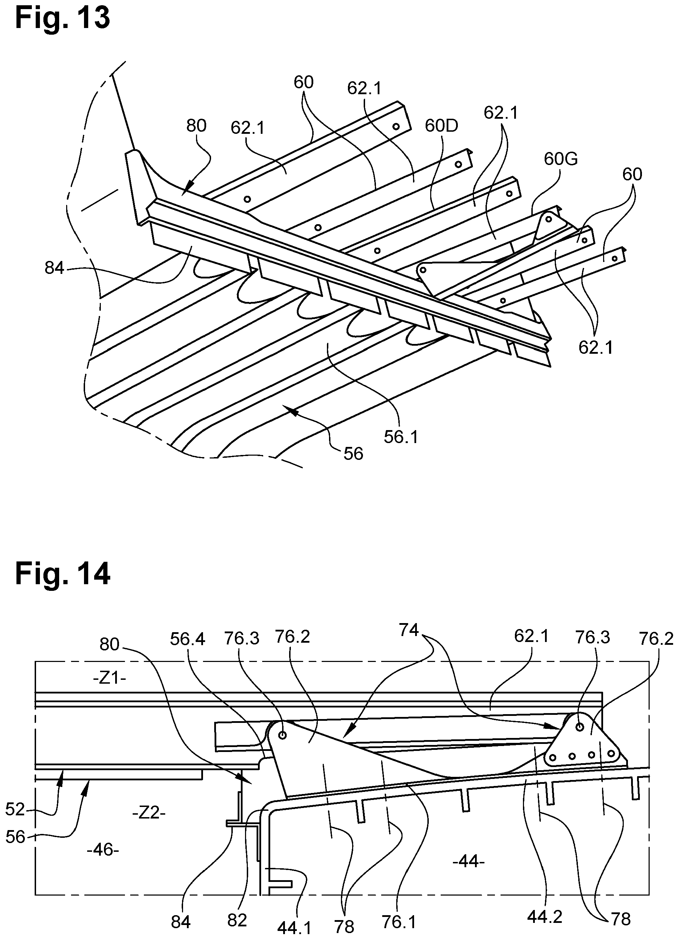

Le fait que les premiers tronçons 60.1 des poutres longitudinales 60 soient rectilignes simplifie la transmission des efforts entre la case de train d'atterrissage principale 46 et le caisson central de voilure 44. Selon cet agencement, le bord avant 56.4 de la coque 56 est espacé du caisson central de voilure 44, comme illustré sur la figure 14. Pour qu'elle soit étanche, la case de train d'atterrissage principale 46 comprend une barrière d'étanchéité 80 qui s'étend le long du bord avant 56.4 de la coque 56, c'est-à-dire sur la largeur de la coque 56 (selon la direction transversale).

Selon un mode de réalisation, la barrière d'étanchéité 80 est distincte de la coque 56 et reliée à cette dernière de manière à ce qu'en fonctionnement, la barrière d'étanchéité 80 soit en contact avec la zone de jonction 82 des panneaux avant et supérieur 44.1, 44.2 du caisson central de voilure 44.

La barrière d'étanchéité 80 est dimensionnée de manière à s'étendre de part et d'autre de la zone de jonction 82.

Le caisson central de voilure 44 comprend une cornière 84 configurée pour maintenir plaquée la barrière d'étanchéité 80 contre le panneau avant 44.1 du caisson central de voilure 44 et contre la face intérieure de la coque 56, au niveau du bord avant 56.4 de la coque 56.

Selon une configuration, la barrière d'étanchéité 80 est un boudin gonflable mis en pression en fonctionnement, grâce par exemple à un système de mise en pression d'une cabine de l'aéronef. Selon une autre configuration, la barrière d'étanchéité 80 est un joint rigide.

## Revendications

1. Aéronef comprenant un fuselage (42) présentant une direction longitudinale ainsi qu'un plan médian vertical et comportant d'avant en arrière un caisson central de voilure (44), une case de train d'atterrissage principale (46) ainsi qu'un tronçon de fuselage (48), la case de train d'atterrissage principale (46) comportant une paroi transversale arrière (50) reliée au tronçon de fuselage (48) positionné à l'arrière de la case de train d'atterrissage principale (46) ainsi qu'une paroi de fond (52) reliée au caisson central de voilure (44), la paroi transversale arrière (50) et la paroi de fond (52) formant une barrière étanche entre une première zone pressurisée (Z1) et une deuxième zone non pressurisée (Z2), l'aéronef comprenant une poutre ventrale (47) traversant la case de train d'atterrissage principale (46) ; la case de train d'atterrissage principale (46) comprenant :
- une coque (56) réalisée d'un seul tenant en matériau composite et séparant la première zone pressurisée (Z1) et la deuxième zone non pressurisée (Z2), ladite coque (56) comportant une première partie (56.1) correspondant à la paroi de fond (52), une deuxième partie (56.2) correspondant à la paroi transversale arrière (50), une face intérieure (F56) orientée vers la deuxième zone non pressurisée (Z2) ainsi qu'une face extérieure (F56') orientée vers la première zone pressurisée (Z1),
- au moins deux poutres longitudinales (60) en matériau composite, orientées parallèlement à la direction longitudinale et reliées à la coque (56),
- des quilles (66.1, 66.2) assurant la continuité de la poutre ventrale (47), les quilles (66.1, 66.2) étant positionnées au droit des poutres longitudinales (60) et étant reliées à la poutre ventrale (47), au tronçon de fuselage (48) ainsi qu'à la coque (56).

2. Aéronef selon la revendication précédente, **caractérisé en ce que** la coque (56) comprend une troisième partie (56.3) courbe reliant les première et deuxième parties (56.1, 56.2).

3. Aéronef selon la revendication précédente, **caractérisé en ce que** la paroi de fond (52) comprend un bord avant (56.4) jouxtant le caisson central de voilure (44) et la paroi transversale arrière (50) comprend un bord arrière (56.7) jouxtant le tronçon de fuselage (48) positionné à l'arrière de la case de train d'atterrissage principale (46) et **en ce que** les poutres longitudinales, dites poutres longitudinales droite et gauche (60D, 60G), sont positionnées de part et d'autre du plan médian vertical, sur la face extérieure (F56') de la coque (56) et présentent chacune un premier tronçon (60.1) rectiligne plaqué contre la première partie (56.1) de la coque (56), un deuxième tronçon (60.2) rectiligne plaqué contre la deuxième partie (56.2) de la coque (56) ainsi qu'un troisième tronçon (60.3) reliant les premier et deuxième tronçons (60.1, 60.2), courbe et plaqué contre la troisième partie (56.3) courbe de la coque (56).

4. Aéronef selon la revendication précédente, **caractérisé en ce que** les poutres longitudinales droite et gauche (60D, 60G) présentent chacune une première extrémité (62.1) reliée au caisson central de voilure (44) ainsi qu'une deuxième extrémité (62.2) reliée au tronçon de fuselage (48) positionné à l'arrière de la case de train d'atterrissage principale (46), les poutres longitudinales droite et gauche (60D, 60G) étant continues entre les première et deuxième extrémités (62.1, 62.2).

5. Aéronef selon la revendication précédente, **caractérisé en ce que** chaque quille (66.1, 66.2) comprend une ferrure (64.1, 64.2), et **en ce que** la coque (56) comprend des lumières (70.1, 70.2) à proximité ou au niveau de son bord arrière (56.7), chaque ferrure (64.1, 64.2) traversant une lumière (70.1, 70.2) de sorte que les ferrures (64.1, 64.2) soient en saillie par rapport à la face intérieure (F56) de la coque (56) et que les quilles (66.1, 66.2) soient positionnées en appui contre le bord arrière (56.7) de la coque (56).

6. Aéronef selon la revendication précédente, **caractérisé en ce que** chaque quille (66.1, 66.2) comprend une âme (68.1) ainsi qu'une semelle (68.2), pour chaque quille (66.1, 66.2), la ferrure (64.1, 64.2) et l'âme (68.1) étant positionnées de part et d'autre de la semelle (68.2), et **en ce que** les lumières (70.1, 70.2) sont positionnées par rapport aux poutres longitudinales droite et gauche (60D, 60G) de manière à ce que lorsque les ferrures (64.1, 64.2) traversent les lumières (70.1, 70.2), les semelles (68.2) soient plaquées contre le bord arrière (56.7) de la coque (56) et les âmes (68.1) soient plaquées respectivement contre les poutres longitudinales droite et gauche (60D, 60G) et reliées à ces dernières.

7. Aéronef selon l'une des revendications 4 à 6, **caractérisé en ce qu'**au moins les poutres longitudinales droite et gauche (60D, 60G) s'étendent au-delà du bord avant (56.4) de la coque (56), chacune de leurs premières extrémités (62.1) étant reliée par une attache (74) au caisson central de voilure (44).

8. Aéronef selon la revendication précédente, **caractérisé en ce que** chaque attache (74) comprend :
- au moins une semelle (76.1) plaquée contre le caisson central de voilure (44) et reliée à ce dernier par des éléments de fixation (78),
- au moins une âme (76.2) solidaire de la semelle (76.1) et pourvue d'au moins un orifice (76.3),
- un élément de liaison, pour chaque orifice (76.3), traversant ledit orifice (76.3) et la poutre longitudinale droite ou gauche (60D, 60G).

9. Aéronef selon la revendication 7 ou 8, **caractérisé en ce que** la case de train d'atterrissage principale (46) comprend une barrière d'étanchéité (80) qui s'étend le long du bord avant (56.4) de la coque (56), ladite barrière étanche (80) étant solidaire de la coque (56) et en contact avec le caisson central de voilure (44).

10. Aéronef selon la revendication 9, **caractérisé en ce que** le caisson central de voilure (44) comprend une cornière (84) configurée pour maintenir plaquée la barrière d'étanchéité (80) contre le caisson central de voilure (44) et la face intérieure de la coque (56), au niveau du bord avant (56.4) de la coque (56).

## Patentansprüche

1. Luftfahrzeug mit einem Rumpf (42), der eine Längsrichtung sowie eine vertikale Mittelebene aufweist und von vorne nach hinten einen mittleren Flügelkasten (44), einen Hauptfahrwerksschacht (46) sowie einen Rumpfabschnitt (48) aufweist, wobei der Hauptfahrwerksschacht (46) eine hintere Querwand (50), die mit dem hinter dem Hauptfahrwerksschacht (46) angeordneten Rumpfabschnitt (48) verbunden ist, sowie eine Bodenwand (52) aufweist, die mit dem mittleren Flügelkasten (44) verbunden ist, wobei die hintere Querwand (50) und die Bodenwand (52) eine dichte Barriere zwischen einer ersten druckbeaufschlagten Zone (Z1) und einer zweiten drucklosen Zone (Z2) bilden, wobei das Luftfahrzeug einen Bauchträger (47) umfasst, der durch den Hauptfahrwerksschacht (46) verläuft, und wobei der Hauptfahrwerksschacht (46) umfasst:
- eine Schale (56), die einstückig aus Verbundmaterial hergestellt ist und die erste druckbeaufschlagte Zone (Z1) von der zweiten nicht druckbeaufschlagten Zone (Z2) trennt, wobei die Schale (56) einen ersten Teil (56.1), der der Bodenwand (52) entspricht, einen zweiten Teil (56.2), der der hinteren Querwand (50) entspricht, eine Innenseite (F56), die der zweiten nicht unter Druck stehenden Zone (Z2) zugewandt ist, sowie eine Außenseite (F56') aufweist, die der unter Druck stehenden Zone (Z1) zugewandt ist,
- wenigstens zwei Längsträger (60) aus Verbundmaterial, die parallel zur Längsrichtung ausgerichtet und mit der Schale (56) verbunden sind,
- Kiele (66.1, 66.2), die die Kontinuität des Bauchträgers (47) gewährleisten, wobei die Kiele (66.1, 66.2) unmittelbar unter den Längsträgern (60) angeordnet sind und mit dem Bauchträger (47), dem Rumpfabschnitt (48) sowie der Schale (56) verbunden sind.

2. Luftfahrzeug nach dem vorhergehenden Anspruch,
**dadurch gekennzeichnet, dass** die Schale (56) einen gekrümmten dritten Teil (56.3) umfasst, der den ersten und zweiten Teil (56.1, 56.2) verbindet.

3. Luftfahrzeug nach dem vorhergehenden Anspruch,
**dadurch gekennzeichnet, dass** die Bodenwand (52) einen vorderen Rand (56.4) aufweist, der an den mittleren Flügelkasten (44) angrenzt, und die hintere Querwand (50) einen hinteren Rand (56.7) aufweist, der an den Rumpfabschnitt (48) angrenzt, der hinter dem Hauptfahrwerksschacht (46) angeordnet ist, und dass die Längsträger, die sogenannten rechten und linken Längsträger (60D, 60G), auf beiden Seiten der vertikalen Mittelebene auf der Außenseite (F56') der Schale (56) angeordnet sind und jeweils einen ersten geraden Abschnitt (60.1), der gegen den ersten Teil (56.1) angesetzt ist, einen zweiten geraden Abschnitt (60.2), der gegen den zweiten Teil (56.2) der Schale (56) angesetzt ist, sowie einen dritten Abschnitt (60.3) aufweisen, der den ersten und zweiten Abschnitt (60.1, 60.2) verbindet, gekrümmt ist und gegen den dritten gekrümmten Teil (56.3) der Schale (56) angesetzt ist.

4. Luftfahrzeug nach dem vorhergehenden Anspruch,
**dadurch gekennzeichnet, dass** der rechte und der linke Längsträger (60D, 60G) jeweils ein erstes Ende (62.1) aufweisen, das mit dem mittleren Flügelkasten (44) verbunden ist, sowie ein zweites Ende (62.2), das mit dem Rumpfabschnitt (48) verbunden ist, der hinter dem Hauptfahrwerksschacht (46) angeordnet ist, wobei der rechte und der der linke Längsträger (60D, 60G) zwischen dem ersten und dem zweiten Ende (62.1, 62.2) durchgehend sind.

5. Luftfahrzeug nach dem vorhergehenden Anspruch,
**dadurch gekennzeichnet, dass** jeder Kiel (66.1, 66.2) einen Beschlag (64.1, 64.2) aufweist, und dass die Schale (56) Ausnehmungen (70.1, 70.2) in der Nähe von oder an ihrem hinteren Rand (56.7) umfasst, wobei jeder Beschlag (64.1, 64.2) durch eine Ausnehmung (70.1, 70.2) verläuft, so dass die Beschläge (64.1, 64.2) in Bezug auf die Innenseite (F56) der Schale (56) vorstehen und die Kiele (66.1, 66.2) an dem hinteren Rand (56.7) der Schale (56) anliegend angeordnet sind.

6. Luftfahrzeug nach dem vorhergehenden Anspruch,
**dadurch gekennzeichnet, dass** jeder Kiel (66.1, 66.2) einen Steg (68.1) sowie einen Flansch (68.2) aufweist, wobei für jeden Kiel (66.1, 66.2) die Beschläge (64.1, 64.2) und der Steg (68.1) beidseits des Flansches (68.2) angeordnet sind, und dass die Ausnehmungen (70.1, 70.2) in Bezug auf den rechten und linken Längsträger (60D, 60G) so angeordnet sind, dass, wenn die Beschläge (64.1, 64.2) durch die Ausnehmungen (70.1, 70.2) hindurchgehen, die Flansche (68.2) gegen den hinteren Rand (56.7) der Schale (56) angesetzt sind und die Stege (68.1) jeweils gegen den rechten und linken Längsträger (60D, 60G) angesetzt und mit diesen verbunden sind.

7. Luftfahrzeug nach einem der Ansprüche 4 bis 6,
**dadurch gekennzeichnet, dass** sich wenigstens der rechte und der linke Längsträger (60D, 60G) über den vorderen Rand (56.4) der Schale (56) hinaus erstrecken, wobei jedes ihrer ersten Enden (62.1) durch eine Befestigung (74) mit dem mittleren Flügelkasten (44) verbunden ist.

8. Luftfahrzeug nach dem vorhergehenden Anspruch,
**dadurch gekennzeichnet, dass** jede Befestigung (74) Folgendes umfasst:
- wenigstens einen Flansch (76.1), der gegen den mittleren Flügelkasten (44) angesetzt ist und mit diesem durch Befestigungselemente (78) verbunden ist,
- wenigstens einen Steg (76.2), der fest mit dem Flansch (76.1) verbunden und mit wenigstens einer Öffnung (76.3) versehen ist,
- ein Verbindungselement, für jede Öffnung (76.3), das durch die Öffnung (76.3) und den rechten oder linken Längsträger (60D, 60G) verläuft.

9. Luftfahrzeug nach Anspruch 7 oder 8, **dadurch gekennzeichnet, dass** der Hauptfahrwerksschacht (46) eine wasserdichte Barriere (80) umfasst, die sich entlang dem vorderen Rand (56.4) der Schale (56) erstreckt, wobei die wasserdichte Barriere (80) fest mit der Schale (56) verbunden ist und mit dem mittleren Flügelkasten (44) in Kontakt steht.

10. Luftfahrzeug nach Anspruch 9, **dadurch gekennzeichnet, dass** der mittlere Flügelkasten (44) einen Winkel (84) aufweist, der so eingerichtet ist, dass er die Dichtungsbarriere (80) im Bereich des vorderen Rands (56.4) der Schale (56) gegen den mittleren Flügelkasten (44) und gegen die Innenseite der Schale (56) angesetzt hält.

## Claims

1. Aircraft comprising a fuselage (42) with a longitudinal direction as well as a vertical median plane, and comprising, from the front to the rear, a central wing spar (44), a main landing gear compartment (46), as well as a section of fuselage (48), the main landing gear compartment (46) comprising a rear transverse wall (50) connected to the section of fuselage (48) which is positioned at the rear of the main landing gear compartment (46), as well as a base wall (52) which is connected to the central wing spar (44), the rear transverse wall (50) and the base wall (52) forming a sealed barrier between a first, pressurized area (Z1) and a second, non-pressurized area (Z2), the aircraft comprising a ventral beam (47) which passes through the main landing gear compartment (46); the main landing gear compartment (46) comprising :
- a body (56), produced in a single piece from composite material, separating the first pressurized area (Z1) and the second non-pressurized area (Z2), said body (56) comprising a first part (56.1) corresponding to the base wall (52), a second part (56.2) corresponding to the rear transverse wall (50), an inner face (F56) which is oriented towards the second non-pressurized area (Z2), as well as an outer face (F56') which is oriented towards the first pressurized area (Z1);
- at least two longitudinal beams (60) made of composite material, oriented parallel to the longitudinal direction and connected to the body (56);
- bolster beams (66.1, 66.2) which assure the continuity of the ventral beam (47), the bolster beams (66.1, 66.2) being positioned in-line with the longitudinal beams (60), and being connected to the ventral beam (47), to the section of fuselage (48), as well as to the body (56).

2. Aircraft as claimed in the preceding claim, wherein the body (56) comprises a third, curved part (56.3) connecting the first and second parts (56.1, 56.2).

3. Aircraft as claimed in the preceding claim, wherein the base wall (52) comprises a front edge (56.4) which is contiguous with the central wing spar (44), and the rear transverse wall (50) comprises a rear edge (56.7) which is contiguous with the section of fuselage (48) positioned at the rear of the main landing gear compartment (46), and wherein the longitudinal beams, known as the right and left longitudinal beams (60D, 60G), are positioned on both sides of the vertical median plane, on the outer face (F56') of the body (56), and each have a first straight section (60.1) which is placed against the first part (56.1) of the body (56), a second straight section (60.2) which is placed against the second part (56.2) of the body (56), as well as a third section (60.3) connecting the first and second sections (60.1, 60.2), which section is curved and is placed against the third, curved part (56.3) of the body (56).

4. Aircraft as claimed in the preceding claim, wherein the right and left longitudinal beams (60D, 60G) each have a first end (62.1) which is connected to the central wing spar (44), as well as a second end (62.2) which is connected to the section of fuselage 48) positioned at the rear of the main landing gear compartment (46), the right and left longitudinal beams (60D, 60G) being continuous between the first and second ends (62.1, 62.2).

5. Aircraft as claimed in the preceding claim, wherein each bolster beam (66.1, 66.2) comprises a brace (64.1, 64.2), and wherein the body (56) comprises slots (70.1, 70.2) which are in the vicinity of, or at, its rear edge (56.7), each brace (64.1, 64.2) passing through a slot (70.1, 70.2), such that the braces (64.1. 64.2) project relative to the inner face (F56) of the body (56), and the bolster beams (66.1, 66.2) are positioned supported against the rear edge (56.7) of the body (56).

6. Aircraft as claimed in the preceding claim, wherein each bolster beam (66.1, 66.2) comprises a core (68.1) as well as a sole plate (68.2), for each bolster beam (66.1, 66.2) the brace (64.1, 64.2) and the core (68.1) being positioned on both sides of the sole plate (68.2), and wherein the slots (70.1, 70.2) are positioned relative to the right and left longitudinal beams (60D, 60G) such that, when the braces (64.1, 64.2) pass through the slots (70.1, 70.2), the sole plates (68.2) are placed against the rear edge (56.7) of the body (56), and the cores (68.1) are placed respectively against the right and left longitudinal beams (60D, 60G), and are connected thereto.

7. Aircraft as claimed in one of claims 4 to 6, wherein at least the right and left longitudinal beams (60D, 60G) extend beyond the front edge (56.4) of the body (56), each of their first ends (62.1) being connected by a fastener (74) to the central wing spar (44).

8. Aircraft as claimed in the preceding claim, wherein each fastener (74) comprises:
- at least one sole plate (76.1) which is placed against the central wing spar (44) and is connected thereto by securing elements (78);
- at least one core (76.2) which is integral with the sole plate (76.1), and is provided with at least one orifice (76.3);
- a connection element for each orifice (76.3), passing through said orifice (76.3) and the right or left longitudinal beam (60D, 60G).

9. Aircraft as claimed in claim 7 or 8, wherein the main landing gear compartment (46) comprises a sealing barrier (80) which extends along the front edge (56.4) of the body (56), said sealing barrier (80) being integral with the body (56) and in contact with the central wing spar (44).

10. Aircraft as claimed in claim 9, wherein the central wing spar (44) comprises an angle bar (84) which is configured to maintain the sealing barrier (80) placed against the central wing spar (44) and the inner face of the body (56), at the front edge (56.4) of the body (56).
